# FASCICULE DE BREVET EUROPEEN

(11) **EP 4 532 811 B1**
(45) Date de publication et mention de la délivrance du brevet: **01.04.2026**
(21) Numéro de dépôt: 23729090.3
(22) Date de dépôt: 26.05.2023
(51) Int. Cl.: D04H 1/60, B32B 5/02, B32B 5/26, B60R 13/08, D04H 1/70, D04H 1/736

(54) **INSTALLATION DE PRODUCTION D'UNE NAPPE EN FIBRES NON TISSE 3D**
ANLAGE ZUR HERSTELLUNG EINES 3D-GEWEBES AUS VLIESFASERN
FACILITY FOR PRODUCING A 3D FABRIC OF NONWOVEN FIBRES

(30) Priorité: 01.06.2022 FR 2205283
(43) Date de publication de la demande: 09.04.2025
(73) Titulaire: Andritz Laroche S.A.S, 69470 Cours (FR)
(72) Inventeur: LAROCHE, Robert, 42460 La Gresle (FR); MONCORGE, Marc, 42460 Cuinzier (FR); TIRANNO, Vincent, 69240 Thizy les bourgs (FR)
(74) Mandataire: Eidelsberg, Olivier Nathan
(86) Numéro de dépôt international: PCT/EP2023/064159
(87) Numéro de publication internationale: WO 2023/232664

(56) Documents cités:
- EP-A1- 1 621 408
- WO-A1-2007/134812
- WO-A1-2009/043195
- US-A1- 2017 369 005

## Description

La présente invention se rapporte à une installation de production pour produire des nappes de fibres de non-tissé, notamment en feutre conformées en trois dimensions (3D) et/ou ayant une masse surfacique variable dans l'espace, notamment destinées à être utilisées dans le domaine de l'industrie automobile.

Des nappes de fibres de non-tissé en trois dimensions d'épaisseur et/ou de masse surfacique variable(s) dans l'espace sont d'un grand intérêt, notamment pour fabriquer des produits dans une large gamme, notamment dans l'industrie automobile pour des isolations sonores et/ou thermiques de portes, de pavillons, plafonds, planchers, recouvrements d'intérieur et analogues.

Les produits préformés en fibres de non-tissé d'épaisseur et/ou de masse surfacique variable(s) sont classiquement produits à partir de couches de fibres, sans réelle cohésion entre elles, formées d'un mélange de fibres contenant des fibres ou des particules liantes, ces couches de fibres étant formées dans un moule puis démoulées et ensuite chauffées dans un four pour les pré-consolider et obtenir un élément à base de fibres non-tissé ayant la forme du moule, les fibres ou particules liantes étant « activées » lors du chauffage. Les produits ainsi obtenus ont la forme du moule et ont une cohésion suffisante pour être manipulés et transportés vers d'autres étapes de moulage des pièces finales avec d'autres couches de non-tissés, textiles et autres matériaux absorbant le bruit.

Ces installations de moulage sont particulièrement compliquées à réaliser et à exploiter. Le démoulage des fibres non consolidées et la manutention des formes est délicate jusqu'à la consolidation dans le four. Quant aux installations à moule rotatif, comme par exemple celle décrite dans EP2532777A1, elles ont en outre l'inconvénient d'être mal adaptées à la production de pièces de grande dimension.

Il est aussi connu, par exemple de WO2009/043195A1, de produire des nappes de fibres non-tissé en 3D avec une pluralité de buses couvrant la totalité de la largeur de la pièce à produire, chaque buse délivrant des fibres sur un tapis comportant une aspiration par le dessous. Les pièces obtenues avec cette technique peuvent certes être de grande dimension mais ne présentent pas une bonne résistance aux efforts.

On connait également de US2017/0369005A1, une installation de formation d'un silencieux pour automobile par moulage par compression, dans lequel une trémie principale dépose par gravitation une couche de fibres de base sur un tapis de convoyage et des trémies secondaires déposent sur la couche de fibres de base des fibres supplémentaires pour former des couches supplémentaires pour obtenir une couche préformée en 3D d'épaisseur et/ou de masse surfacique variable(s) dans l'espace, la couche préformée étant ensuite convoyée, après une éventuelle opération de préchauffage, dans une installation de moulage par compression donnant en sortie le silencieux.

On aimerait avoir à disposition une installation de production de produits à base de fibres de ce genre qui soit beaucoup plus simple à mettre en œuvre et qui permet d'obtenir un produit ayant une meilleure résistance.

Suivant un premier aspect de l'invention, une installation de fabrication d'une nappe de fibres non-tissé, notamment en feutre, en 3D, comportant un dispositif de dépose d'un mélange de fibres sensiblement non liées entre elles sous la forme d'une couche de base sur un tapis de convoyage perméable à l'air, notamment perforé, la couche de base étant convoyée jusqu'à une zone dite d'apport disposée en face d'au moins une buse d'apport de fibres supplémentaires, la au moins une buse d'apport de fibres déposant sur la couche de base des fibres supplémentaires pour former dans au moins une région de la couche de base au moins une couche supplémentaire pour ainsi obtenir une couche préformée en trois dimensions ou 3D ayant une épaisseur et/ou une masse surfacique variable dans l'espace, la couche préformée 3D étant ensuite convoyée dans un élément de consolidation pour consolider la couche préformée en 3D en la nappe finale en 3D ayant une épaisseur et/ou une masse surfacique variable dans l'espace, caractérisée en ce qu'il est prévu des moyens d'aspiration disposés de manière à aspirer l'air contenu dans la couche de base pour la maintenir sur le tapis de convoyage au niveau de la zone d'apport et la au moins une buse apportant les fibres supplémentaires par projection ou injection par un courant d'air.

En prévoyant ainsi de déposer sur une couche de fibres de base préalablement formée, les plots et autres formes ayant un volume destinés à donner à la couche de fibres la forme d'un produit en 3D, pour obtenir ainsi, après consolidation des fibres de la couche, un produit final à base d'une nappe de fibres, notamment en feutre, en 3D, ayant une épaisseur et/ou une masse surfacique variable(s) dans l'espace, les inventeurs se sont rendus compte, à leur grande surprise, que les parties supplémentaires ajoutées sur la couche se déplaçant devant les buses d'apport tenaient leurs formes au moins jusqu'à leur consolidation dans le four, ce qui permettaient ainsi d'obtenir facilement les produits en 3D, notamment sans avoir à utiliser une installation de moulage compliquée. En outre, le produit obtenu est bien homogène, a une grande stabilité et résiste bien aux efforts, contrairement aux pièces des systèmes de l'art antérieur qui présentent dans leur matière des interfaces s'étendant dans toute la longueur et toute la hauteur nuisant à leur résistance.

De préférence, suivant un deuxième aspect de l'invention, qui en soi constitue une invention indépendante du premier aspect de l'invention, mais qui peut être mis en œuvre de manière favorable avec celui-ci, une installation de fabrication d'une nappe de fibres non-tissé, notamment en feutre, en 3D, comportant un dispositif de dépose d'un mélange de fibres sensiblement non liées entre elles sous la forme d'une couche de base sur un tapis de convoyage perméable à l'air, notamment perforé, la couche de base étant convoyée jusqu'à une zone dite d'apport disposée en face d'au moins une buse d'apport de fibres supplémentaires, la au moins une buse d'apport de fibres déposant sur la couche de base des fibres supplémentaires pour former dans au moins une région de la couche de base au moins une couche supplémentaire pour ainsi obtenir une couche préformée en trois dimensions ou 3D ayant une épaisseur et/ou une masse surfacique variable dans l'espace, la couche préformée 3D étant ensuite convoyée dans un élément de consolidation pour consolider la couche préformée en 3D en la nappe finale en 3D ayant une épaisseur et/ou une masse surfacique variable dans l'espace, est caractérisée en ce qu'il est prévu des moyens de commande de la vitesse du tapis de convoyage, et ces moyens de commande comportent des moyens d'arrêt ou de ralentissement du déplacement du tapis pendant un laps de temps donné, le temps de déposer une ou des couches supplémentaires sur la couche de base pour la formation d'une couche préformée donnée en 3D pour la formation d'un produit, avant de redémarrer ou réaccélérer le tapis pour déplacer la couche préformée 3D d'une distance donnée pour ainsi permettre la dépose d'une ou de couches supplémentaire pour la formation d'un produit suivant sur la couche de base.

Suivant l'invention, de manière favorable, on peut ne prévoir qu'une seule buse d'apport de fibres supplémentaires dans la zone de formation de la couche préformée.

En particulier, suivant un troisième aspect de l'invention, qui en soi constitue une invention indépendante des autres aspects de l'invention, mais qui peut être mis en œuvre de manière favorable avec chacun d'entre eux ou avec les deux ensembles, une installation de fabrication d'une nappe de fibres non-tissé, notamment en feutre, en 3D, comportant un dispositif de dépose d'un mélange de fibres sensiblement non liées entre elles sous la forme d'une couche de base sur un tapis de convoyage perméable à l'air, notamment perforé, la couche de base étant convoyée jusqu'à une zone dite d'apport disposée en face d'au moins une buse d'apport de fibres supplémentaires, la au moins une buse d'apport de fibres déposant sur la couche de base des fibres supplémentaires pour former dans au moins une région de la couche de base au moins une couche supplémentaire pour ainsi obtenir une couche préformée en trois dimensions ou 3D ayant une épaisseur et/ou une masse surfacique variable dans l'espace, la couche préformée 3D étant ensuite convoyée dans un élément de consolidation pour consolider la couche préformée en 3D en la nappe finale en 3D ayant une épaisseur et/ou une masse surfacique variable dans l'espace, est caractérisée en ce qu'il est prévu des moyens de commande de déplacement de la buse d'apport de fibres supplémentaires au-dessus de la zone d'apport pour commander le déplacement de la buse au-dessus de la zone d'apport en fonction de la forme finale souhaitée du produit.

Cependant on pourrait également prévoir, plutôt que de déplacer une unique buse sur la zone d'apport, une pluralité de buses, qui sont fixes et/ou également mobiles, pour apporter les fibres supplémentaires sur la couche de fibres de base.

De préférence, la au moins une buse est solidaire d'au moins un bras de commande, notamment piloté par un système robotisé.

De préférence, l'élément de consolidation est un élément de traitement thermique, notamment un four.

Une fois le produit sorti du four, on peut soit enrouler la nappe finale obtenue par consolidation thermique, soit découper à des formats de dimensions prédéterminées les produits les uns après les autres et, éventuellement, les empiler.

De préférence, la couche de base est continue.

De préférence, il est prévu au moins un gabarit, notamment solidaire d'un bras de commande, notamment piloté par un système robotisé, destiné à être positionné de manière à délimiter la forme d'une région dans laquelle sont apportées des fibres supplémentaires.

De préférence, le mélange de fibres comporte des fibres non liantes et des fibres ou des particules liantes, ces dernières étant destinées, sous l'effet du traitement thermique final à consolider la couche préformée pour obtenir la nappe en 3D.

De préférence, la couche de base a une (des) épaisseur et/ou masse surfacique de base et la couche préformée en 3D a une(des) plus grande(s) épaisseur et/ou masse surfacique comprise entre 1,1 fois et 5 fois l'épaisseur/masse surfacique de la couche de base, notamment entre 1,2 et 3.

De préférence, le tapis de convoyage comporte une section rectiligne, notamment au niveau de la zone d'apport.

Suivant un perfectionnement, qui constitue en soi une invention indépendamment des aspects décrits ci-dessus de l'invention, mais qui peut favorablement être combiné avec chacun d'entre eux ou une combinaison de deux ou plus de ceux-ci, la nappe 3D entrant dans un four est prise en sandwich entre deux tapis respectivement supérieur et inférieur pendant la consolidation thermique, les deux tapis étant à distance l'un de l'autre, ce qui permet d'obtenir une nappe en sortie d'épaisseur régulière, épaisseur qui correspond à la distance entre les deux tapis inférieur et supérieur du four, ce qui permet que la nappe pré-consolidée ou consolidée en sortie du four ait une épaisseur sensiblement constante et un grammage ou une densité variable.

Ainsi la présente invention se rapporte aussi à une installation de fabrication d'une nappe de fibres non-tissé, notamment en feutre, en 3D, caractérisée en ce qu'elle comporte un four de consolidation thermique dans lequel la nappe 3D est prise en sandwich entre deux tapis respectivement supérieur et inférieur, à distance l'un de l'autre.

A titre d'exemple, on décrit un mode de réalisation d'une installation suivant l'invention, en se rapportant aux dessins dans lesquels :
La figure 1 est une vue de côté d'une installation suivant l'invention ; et

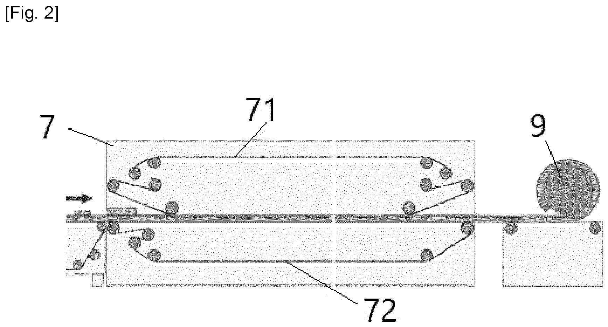

La figure 2 est une vue de côté de la fin de l'installation de la figure 1, incluant le four et un enrouleur.

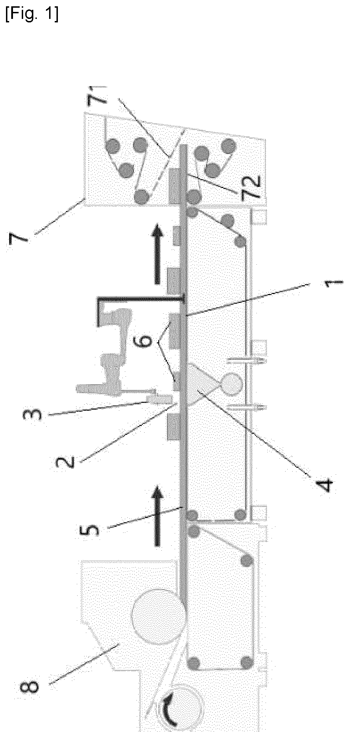

A la figure 1, un dispositif 8 de formation d'un mélange de fibres dépose sur un premier convoyeur 9 rectiligne sans fin perforé des fibres sous la forme d'un mélange comportant des fibres de base, par exemple des fibres de polyester ou des fibres naturelles issues d'une nappeuse pneumatique et des fibres liantes, par exemple en Polypropylène, en Co polyester ou un bi-composant Polyester - Co polyester, pour former une couche 5 continue de fibres. La couche 5 est ensuite transférée sur un deuxième convoyeur 1 rectiligne sans fin perforé. Suivant un autre mode de réalisation, les deux convoyeurs 9 et 1 pourraient être remplacé par un unique convoyeur réalisant l'ensemble des fonctions de convoyage des deux convoyeurs.

Dans cette couche 5 de fibres, les fibres n'ont pas entre elles de cohésion, et par exemple, on peut en enlever à la main des fibres sans que tout le reste de la couche suive.

La couche de fibres ainsi formée et transférée sur le tapis 1 perforé, passe ensuite dans une zone 2 d'apport, en face de laquelle une buse 3 d'apport de fibres supplémentaires peut se déplacer, sous la commande d'un bras de robot commandé par un circuit de commande électronique approprié bien connu dans le domaine, et qui permet, en fonction de la vitesse de déplacement du bras, de la vitesse de sortie des fibres de la buse, du diamètre de la buse, de la distance de la buse à la couche, du poids des fibres ajoutées, etc... , de déposer des couches 6 de fibres supplémentaires en certains endroits de la couche de base pour obtenir ; en sortie de la zone d'apport, une couche préformée dont la forme est fonction de la forme en 3D du produit final que l'on entend obtenir.

La buse 3 d'apport est ici une buse d'injection, qui injecte les fibres supplémentaires par l'intermédiaire d'un courant d'air d'injection.

Pour faire en sorte que la buse 3 ait le temps d'injecter toutes les fibres nécessaires pour réaliser les parties en volume correspondant à la forme du produit en 3D que l'on souhaite obtenir, les moyens de commande de déplacement du tapis supportant la couche de base maintenue par des moyens de maintien réalisés classiquement par des moyens de maintien, sont arrêtés pendant un laps de temps suffisant pour permettre à la buse de déposer l'ensemble des fibres nécessaires à la forme souhaitée.

La buse peut en particulier être solidarisée à un bras de robot commandé par ordinateur. Une autre solution peut être de prévoir une pluralité de buses fixes, dont les débits respectifs sont commandés en fonction de la forme 3D finale souhaitées. Une combinaison de ces deux solutions, c'est-à-dire une combinaison de buses fixes et mobiles est également possible. De même, au lieu d'une seule buse mobile, on peut prévoir plusieurs buses mobiles sous la commande d'un ou plusieurs bras de robot.

Une fois les parties à volume déposées sur la couche de base dans la zone d'apport, on obtient une couche préformée et cette couche préformée est convoyée dans un four 7 pour permettre sa consolidation. Cette consolidation s'effectue par la mise en fusion des fibres liantes du mélange de fibres. A la sortie du four, la nappe peut être enroulée ou découpée pièce par pièce, chaque pièce étant ensuite empilée les unes sur les autres.

Suivant un mode de réalisation avantageux, la nappe 3D entrant dans le four 7 est prise en sandwich entre deux tapis 71 et 72 respectivement supérieur et inférieur pendant la consolidation thermique, les deux tapis étant à distance l'un de l'autre, ce qui permet d'obtenir une nappe en sortie d'épaisseur régulière, épaisseur qui correspond à la distance entre les deux tapis inférieur et supérieur du four, ce qui permet que la nappe pré-consolidée ou consolidée en sortie du four ait une épaisseur sensiblement constante et un grammage ou une densité variable. A la sortie du four 7, la nappe thermiquement consolidée est transférée vers un dispositif enrouleur 9.

De préférence, la couche de base a un poids surfacique d'au moins 300 g/m², notamment compris entre 300 et 2.500 g/m².

Sous le tapis perméable, notamment percé de trous, un dispositif 4 de formation de vide conçu pour produire une pression négative en direction du tapis est disposé. La pression du vide assure que la nappe de base reste bien solidarisée pendant le processus d'alimentation et le processus d'apport de fibres supplémentaire, et de préférence également dans le four.

Le dispositif d'aspiration est conçu pour appliquer une pression négative sous le produit afin d'aspirer et de maintenir la couche de base et la couche préformée sur le tapis pendant les différentes étapes du processus.

Le matériau de base est de préférence constitué de fibres, telles que des fibres naturelles, par exemple des fibres de coton et/ou des fibres synthétiques, comme par exemple des fibres en matière thermoplastique et/ou des fibres minérales ou une combinaison de celles-ci. Outre des fibres, le matériau de base peut comporter d'autres matériaux supplémentaires sous la forme de poudres, granulés, mousses ou autres. La nappe de base peut être de même composition fibreuse que les fibres déposées, par la ou les buses, ou être de composition différente.

Une partie du matériau de base peut comporter des matériaux liants, tels que des fibres liantes ou des particules sous la forme de poudres, flocons ou autres, qui sont activées pendant le traitement thermique.

Le dispositif de formation de fibres, en amont du dispositif de dépose de fibres supplémentaires par la ou les buses, comporte, de manière la plus préférable, une nappeuse de type nappeuse pneumatique. Lorsque le tapis est arrêté l'alimentation en fibres de la nappeuse est arrêté. Puis l'alimentation en fibres de la nappeuse reprend de manière synchronisée avec l'avance du tapis de manière à maintenir un grammage constant. Il est aussi envisageable dans une manière de réaliser l'invention de faire varier le grammage de la nappe de base dans le sens d'avance de la nappe par une variation de l'alimentation en fibres de la nappeuse.

Dans une variante, la couche de base pourrait aussi être formée avec un nappeur dit crosslapper précédé d'une carde. Dans ce cas, le nappeur et la carde qui l'alimente sont synchronisés avec la vitesse et l'arrêt de la ligne. Il est aussi possible avec cette solution nappeur + carde de créer des nappes de base de grammage variable avant la dépose par la ou les buses. Lorsque la carde est pilotée avec le nappeur, il est possible de former une nappe de base de grammage variable en sens transversal ce qui n'est pas possible avec une nappeuse pneumatique.

## Revendications

1. Installation de fabrication d'une nappe de fibres non-tissé, notamment en feutre, en 3D, comportant un dispositif (8) de dépose d'un mélange de fibres sensiblement non liées entre elles sous la forme d'une couche (5) de base sur un tapis de convoyage perméable à l'air, notamment perforé, la couche de base étant convoyée jusqu'à une zone (2) dite d'apport disposée en face d'au moins une buse (3) d'apport de fibres supplémentaires, la au moins une buse d'apport de fibres déposant sur la couche de base des fibres supplémentaires pour former dans au moins une région de la couche de base au moins une couche (6) supplémentaire pour ainsi obtenir une couche préformée en trois dimensions ou 3D ayant une épaisseur et/ou une masse surfacique variable dans l'espace, la couche préformée 3D étant ensuite convoyée dans un élément (7) de consolidation pour consolider la couche préformée en 3D en la nappe finale en 3D ayant une épaisseur et/ou une masse surfacique variable dans l'espace, **caractérisée en ce qu'**il est prévu des moyens d'aspiration disposés de manière à aspirer l'air contenu dans la couche de base pour la maintenir sur le tapis de convoyage au niveau de la zone d'apport et la au moins une buse (3) apportant les fibres supplémentaires par projection ou injection par un courant d'air.

2. Installation suivant la revendication 1, **caractérisée en ce qu'**il est prévu des moyens de commande de la vitesse du tapis de convoyage, et ces moyens de commande comportent des moyens d'arrêt ou de ralentissement du déplacement du tapis pendant un laps de temps donné, le temps de déposer une ou des couches (6) supplémentaires sur la couche de base (5) pour la formation d'une couche préformée donnée en 3D pour la formation d'un produit, avant de redémarrer ou réaccélérer le tapis pour déplacer la couche préformée 3D d'une distance donnée pour ainsi permettre la dépose d'une ou de couches (6) supplémentaire pour la formation d'un produit suivant sur la couche (5) de base.

3. Installation suivant la revendication 1 ou 2, **caractérisée en ce qu'**il n'est prévu qu'une seule buse (3) d'apport de fibres supplémentaires dans la zone de formation de la couche préformée.

4. Installation suivant l'une des revendications précédentes, **caractérisée en ce qu'**il est prévu des moyens de commande de déplacement de la buse (3) ou des buses d'apport de fibres supplémentaires au-dessus de la zone (2) d'apport pour commander le déplacement de la buse (3) ou des buses au-dessus de la zone (2) d'apport en fonction de la forme finale souhaitée du produit.

5. Installation suivant la revendication 4, **caractérisée en ce que** la au moins une buse (3) est solidaire d'au moins un bras de commande, notamment piloté par un système robotisé.

6. Installation suivant l'une des revendications précédentes, **caractérisée en ce que** la couche (5) de base est continue.

7. Installation suivant l'une des revendications précédentes, **caractérisée en ce qu'**il est prévu au moins un gabarit, notamment solidaire d'un bras de commande, notamment piloté par un système robotisé, destiné à être positionné de manière à délimiter la forme d'une région dans laquelle sont apportées des fibres (6) supplémentaires.

8. Installation suivant l'une des revendications précédentes, **caractérisée en ce que** l'élément de consolidation est un élément de consolidation par traitement thermique, notamment un four.

9. Installation suivant l'une des revendications précédentes, **caractérisée en ce que** l'élément de consolidation par traitement thermique est un four.

10. Installation suivant l'une des revendications précédentes, **caractérisée en ce que** le mélange de fibres comporte des fibres non liantes et des fibres ou des particules liantes, ces dernières étant destinées, sous l'effet d'un traitement thermique final à consolider la couche préformée pour obtenir la nappe en 3D.

11. Installation suivant l'une des revendications précédentes, **caractérisée en ce que** la couche (5) de base a une (des) épaisseur et/ou masse surfacique de base et la couche préformée en 3D a une(des) plus grande(s) épaisseur et/ou masse surfacique comprise entre 1,1 fois et 5 fois l'épaisseur/masse surfacique de base, notamment entre 1, 2 et 3.

12. Installation suivant l'une des revendications précédentes, **caractérisée en ce que** le tapis de convoyage comporte une section rectiligne, notamment au niveau de la zone (2) d'apport.

13. Installation suivant l'une des revendications précédentes, **caractérisée en ce que** la nappe 3D entrant dans un four (7) est prise en sandwich entre deux tapis respectivement (71) supérieur et (72) inférieur pendant la consolidation thermique, les deux tapis (71,72) étant à distance l'un de l'autre.

## Patentansprüche

1. Anlage zur Herstellung eines Gewebes aus Vliesfasern, insbesondere aus Filz, in 3D, umfassend eine Vorrichtung (8) zur Ablage einer Mischung aus im Wesentlichen nicht miteinander verbundenen Fasern in Form einer Grundschicht (5) auf einem luftdurchlässigen, insbesondere perforierten Förderband, wobei die Grundschicht bis zu einer sogenannten Zufuhrzone (2) befördert wird, die vor mindestens einer Düse (3) zur Zufuhr zusätzlicher Fasern angeordnet ist, wobei die mindestens eine Düse zur Zufuhr von Fasern zusätzliche Fasern auf der Grundschicht ablegt, um in mindestens einem Bereich der Grundschicht mindestens eine zusätzliche Schicht (6) zu bilden, um so eine vorgeformte Schicht in drei Dimensionen oder 3D zu erhalten, die eine räumlich veränderliche Dicke und/oder Flächenmasse hat, wobei die vorgeformte 3D-Schicht anschliessend in ein Element (7) zur Verfestigung befördert wird, um die vorgeformte 3D-Schicht in der endgültigen 3D-Schicht zu verfestigen, die eine räumlich veränderliche Dicke und/oder Flächenmasse hat, **dadurch gekennzeichnet, dass** Mittel zum Absaugen vorgesehen sind, die so angeordnet sind, dass die vorhandene Luft in der Grundschicht abgesaugt wird, um sie auf dem Förderband in Höhe der Zufuhrzone und der mindestens einen Düse (3), die die zusätzlichen Fasern durch Projektion oder Injektion durch einen Luftstrom zuführt, zu halten.

2. Anlage nach Anspruch 1, **dadurch gekennzeichnet, dass** Mittel zur Steuerung der Geschwindigkeit des Förderbandes vorgesehen sind, und diese Mittel zur Steuerung Mittel zum Anhalten oder Verlangsamen der Verlagerung des Bandes während einer bestimmten Zeitspanne umfassen, und zwar die Zeit zum Ablegen von einer oder von zusätzlichen Schichten (6) auf der Grundschicht (5) zur Bildung einer bestimmten vorgeformten 3D-Schicht zur Bildung eines Produkts, vor einem erneuten Starten oder erneuten Beschleunigen des Bandes zur Verlagerung der vorgeformten 3D-Schicht über eine bestimmte Strecke, um so die Ablage von einer oder von zusätzlichen Schichten (6) zur Bildung eines anschliessenden Produkts auf der Grundschicht (5) zu ermöglichen.

3. Anlage nach Anspruch 1 oder 2, **dadurch gekennzeichnet, dass** nur eine einzige Düse (3) zur Zufuhr zusätzlicher Fasern in der Zone zur Bildung der vorgeformten Schicht vorgesehen ist.

4. Anlage nach einem der vorstehenden Ansprüche, **dadurch gekennzeichnet, dass** Mittel zur Steuerung der Verlagerung der Düse (3) oder der Düsen zur Zufuhr zusätzlicher Fasern über der Zufuhrzone (2) vorgesehen sind, um die Verlagerung der Düse (3) oder der Düsen über der Zufuhrzone (2) in Abhängigkeit von der gewünschten endgültigen Form des Produkts zu steuern.

5. Anlage nach Anspruch 4, **dadurch gekennzeichnet, dass** die mindestens eine Düse (3) mit mindestens einem Steuerungsarm, der insbesondere durch ein Robotersystem gelenkt wird, fest verbunden ist.

6. Anlage nach einem der vorstehenden Ansprüche, **dadurch gekennzeichnet, dass** die Grundschicht (5) durchgehend ist.

7. Anlage nach einem der vorstehenden Ansprüche, **dadurch gekennzeichnet, dass** mindestens eine Schablone vorgesehen ist, die insbesondere mit einem Steuerungsarm, der insbesondere durch ein Robotersystem gelenkt wird, fest verbunden ist, dazu bestimmt, so positioniert zu werden, dass die Form eines Bereichs eingegrenzt wird, in dem zusätzliche Fasern (6) zugeführt werden.

8. Anlage nach einem der vorstehenden Ansprüche, **dadurch gekennzeichnet, dass** das Element zur Verfestigung ein Element zur Verfestigung durch chemische Behandlung, insbesondere ein Ofen, ist.

9. Anlage nach einem der vorstehenden Ansprüche, **dadurch gekennzeichnet, dass** das Element zur Verfestigung durch chemische Behandlung ein Ofen ist.

10. Anlage nach einem der vorstehenden Ansprüche, **dadurch gekennzeichnet, dass** die Fasermischung nicht bindende Fasern und bindende Fasern oder Partikel umfasst, wobei diese letzteren dazu bestimmt sind, unter der Einwirkung einer abschliessenden Wärmebehandlung die vorgeformte Schicht zu verfestigen, um das 3D-Gewebe zu erhalten.

11. Anlage nach einem der vorstehenden Ansprüche, **dadurch gekennzeichnet, dass** die Grundschicht (5) eine Dicke (Dicken) und/oder Grundflächenmasse hat und die vorgeformte 3D-Schicht eine grössere Dicke (Dicken) und/oder Flächenmasse zwischen dem 1,1-fachen und 5-fachen der Dicke/Grundflächenmasse, insbesondere zwischen 1, 2 und 3, hat.

12. Anlage nach einem der vorstehenden Ansprüche, **dadurch gekennzeichnet, dass** das Förderband einen geradlinigen Abschnitt umfasst, insbesondere in Höhe der Zufuhrzone (2).

13. Anlage nach einem der vorstehenden Ansprüche, **dadurch gekennzeichnet, dass** das in einen Ofen (7) eintretende 3D-Gewebe während der thermischen Verfestigung zwischen zwei Transportbändern, jeweils einem oberen (71) und einem unteren (72), sandwichartig eingeschlossen ist, wobei die beiden Transportbänder (71, 72) voneinander beabstandet sind.

## Claims

1. Facility for producing a 3D fabric of non woven fibres, in particular made of felt, comprising a device (8) for depositing a mixture of fibres that are substantially not bonded together in the form of a base layer (5) on an air-permeable, in particular perforated, conveyor belt, the base layer being conveyed to what is known as a supply zone (2) located opposite at least one nozzle (3) for supplying additional fibres, the at least one fibre supply nozzle depositing additional fibres on the base layer to form at least one additional layer (6) in at least one region of the base layer to thus obtain a preformed layer in three dimensions or 3D layer having a thickness and/or a surface density that is variable in space, the preformed 3D layer then being conveyed into a consolidation element (7) to consolidate the preformed 3D layer into the final 3D layer having a thickness and/or a surface density that is variable in space, **characterised in that** aspiration means are provided, these being arranged such as to draw up the air contained in the base layer so as to maintain said layer on the conveyor belt in the region of the supply zone and the at least one nozzle (3) supplying the additional fibres by projection or injection by an air stream.

2. Facility according to claim 1, **characterised in that** means for controlling the speed of the conveyor belt are provided, and these control means comprise means for stopping or slowing down the movement of the belt over a given period of time, the time required to deposit one or more additional layers (6) on the base layer (5) to form a given preformed 3D layer in order to form a product, before starting up or speeding up the belt again to move the preformed 3D layer a given distance to thus allow one or more additional layers (6) to be deposited to form a subsequent product on the base layer (5).

3. Facility according to either claim 1 or claim 2, **characterised in that** only one nozzle (3) for supplying additional fibres is provided in the zone for forming the preformed layer.

4. Facility according to any of the preceding claims, **characterised in that** means for controlling the movement of the nozzle (3) or nozzles for supplying additional fibres are provided above the supply zone (2) for controlling movement of the nozzle (3) or nozzles above the supply zone (2) as a function of the desired final shape of the product.

5. Facility according to claim 4, **characterised in that** the at least one nozzle (3) is an integral part of at least one control arm, in particular driven by a robotic system.

6. Facility according to any of the preceding claims, **characterised in that** the base layer (5) is continuous.

7. Facility according to any of the preceding claims, **characterised in that** at least one template is provided, in particular as an integral part of a control arm, in particular driven by a robotic system, which is intended to be positioned such as to delimit the shape of a region in which additional fibres (6) are supplied.

8. Facility according to any of the preceding claims, **characterised in that** the consolidation element is an element for consolidation by heat treatment, in particular in an oven.

9. Facility according to any of the preceding claims, **characterised in that** the consolidation element by heat treatment is an oven.

10. Facility according to any of the preceding claims, **characterised in that** the mixture of fibres comprises non-binder fibres and binder fibres or particles, the latter being intended to consolidate the preformed layer under the influence of a final heat treatment in order to obtain the 3D fabric.

11. Facility according to any of the preceding claims, **characterised in that** the base layer (5) has a base thickness (or thicknesses) and/or surface density and the preformed 3D layer has a greater thickness (thicknesses) and/or surface density of between 1.1 and 5 times the base thickness/surface density, in particular between 1, 2 and 3 times.

12. Facility according to any of the preceding claims, **characterised in that** the conveyor belt has a straight section, particularly in the region of the supply zone (2).

13. Facility according to any of the preceding claims, **characterised in that** the 3D fabric entering an oven (7) is sandwiched between two belts, an upper (71) and lower (72) belt respectively during thermal consolidation, both belts (71, 72) being at a distance from one another.
